Europäisches Patentamt

European Patent Office

Office européen des brevets

(11) Numéro de publication: **0 168 337
B1**

(12) **FASCICULE DE BREVET EUROPEEN**

(45) Date de publication du fascicule du brevet:
**17.11.88**

(51) Int. Cl.⁴: **H 04 B 3/60, B 66 B 1/34**

(21) Numéro de dépôt: **85630084.3**

(22) Date de dépôt: **06.06.85**

(54) **Télécommande de treuil.**

(30) Priorité: **08.06.84 FR 8409003**

(43) Date de publication de la demande:
**15.01.86 Bulletin 86/3**

(45) Mention de la délivrance du brevet:
**17.11.88 Bulletin 88/46**

(84) Etats contractants désignés:
**CH DE GB LI NL**

(56) Documents cités:
**DE - B - 1 089 138
GB - A - 2 001 507
GB - A - 2 109 136
US - A - 3 662 861**

**ELEKTOR, vol. 9, no. 2, février 1983, pages 2-42 - 2-51,
Canterbury, Kent, GB; J.J.M. HABETS: "Acoustic
telephone modem"
FUNKSCHAU, no. 15, juillet 1982, pages 70,71, Munich,
DE; C. KROITZSCH: "Mehr Reichweite mit Supercom"**

(73) Titulaire: **Secalt S.A., 1, Rue du Fort Dumoulin,
Luxembourg-Pulvermuhl (LU)**

(72) Inventeur: **Mansion Marcel, 109 rue des Gatinettes, St
Cyr en Val (Loiret) (FR)**

(74) Mandataire: **Waxweiler, Jean et al, OFFICE
DENNEMEYER S.à.r.l. P.O. Box 1502,
L-1015 Luxembourg (LU)**

## Description

La présente invention concerne un dispositif de transmission pour la télécommande de treuils d'ascenseurs ou de nacelles pour le transport de charges ou de personnes, au moyen de signaux électriques transmis par le câble porteur.

On connaît déjà un dispositif de transmission de ce genre qui permet de remplacer les liaisons par fil ou radio généralement utilisées pour la télécommande des treuils, des ascenseurs ou nacelles. Un tel dispositif qui est décrit dans le brevet GB-2 109 136, utilise une transmission des signaux par modulation de position, avec une porteuse à fréquence fixe relativement élevée, de l'ordre de 40 kHz. L'emploi d'une telle porteuse présente l'inconvénient d'entraîner des pertes importantes sur des longueurs pouvant dépasser 100 m, ainsi que le risque de rayonnement radioélectrique. Par ailleurs le nombre des commandes est très limité puisque seules six commandes sont possibles. Enfin un tel dispositif n'assure aucune sécurité en ce qui concerne le niveau du signal capté à la réception.

La présente invention vise à remédier à ces inconvénients en procurant un dispositif particulièrement fiable, et de conception particulièrement simple puisqu'il évite de faire appel à une porteuse à fréquence fixe relativement élevée.

A cet effet ce dispositif de transmission pour la télécommande de treuils d'ascenseurs ou nacelles pour le transport de charges ou de personnes, au moyen de signaux électriques transmis par le câble porteur, comprenant, pour l'émission et la réception, deux bobines de couplage respectivement émettrice et réceptrice, chacune de ces bobines de couplage, en forme de tore, entourant le câble, formant transducteur et étant respectivement connectée à un ensemble émetteur et à un ensemble récepteur, est caractérisé en ce que l'ensemble émetteur comprend, d'une part, un encodeur relié à un clavier et émettant des signaux alternatifs ayant une première ou une seconde fréquence, dans la bande allant de 300 à 3000 Hz, suivant la valeur du chiffre binaire à transmettre, et, d'autre part, un microphone, l'encodeur et le microphone étant reliés à l'entrée d'un étage amplificateur dont la sortie est connectée à la bobine de couplage émettrice, et l'ensemble récepteur comporte un étage amplificateur connecté à la bobine de couplage réceptrice et qui alimente d'une part un décodeur agissant sur des relais de commande et d'autre part un écouteur téléphonique.

Suivant une caractéristique complémentaire de l'invention l'ensemble récepteur comprend un préamplificateur différentiel connecté à la bobine de couplage réceptrice et dont la sortie est reliée, par l'intermédiaire d'un filtre passe-bande, à l'entrée d'un détecteur de niveau à commande automatique de gain (compresseur) agissant sur le préamplificateur, et la sortie de ce détecteur de niveau est à son tour reliée à une entrée d'un amplificateur dont la sortie est reliée à un second détecteur de niveau à commande automatique de gain (expanseur) agissant sur l'amplificateur précédent et dont la sortie alimente l'écouteur et le décodeur.

Le dispositif de transmission suivant l'invention offre l'avantage qu'il fonctionne à basse fréquence et par conséquent il n'introduit que des pertes faibles dans les câbles métalliques, il produit peu d'interférences et il n'engendre pas de rayonnement radioélectrique. Par ailleurs la transmission téléphonique s'effectue à fréquence vocale, sans faire appel à une porteuse, d'où une grande simplification du dispositif. Les dispositifs détecteurs de niveau à contrôle automatique de gain prévus dans l'ensemble récepteur assurent une dynamique de compensation de 10 000 qui est indispensable sur des longueurs de câble au delà de 30 m. Par ailleurs le dispositif permet d'assurer la transmission avec des mots de 8 bits, d'où 128 commandes possibles, avec un test de parité sur le mot transmis, d'où une plus grande securité.

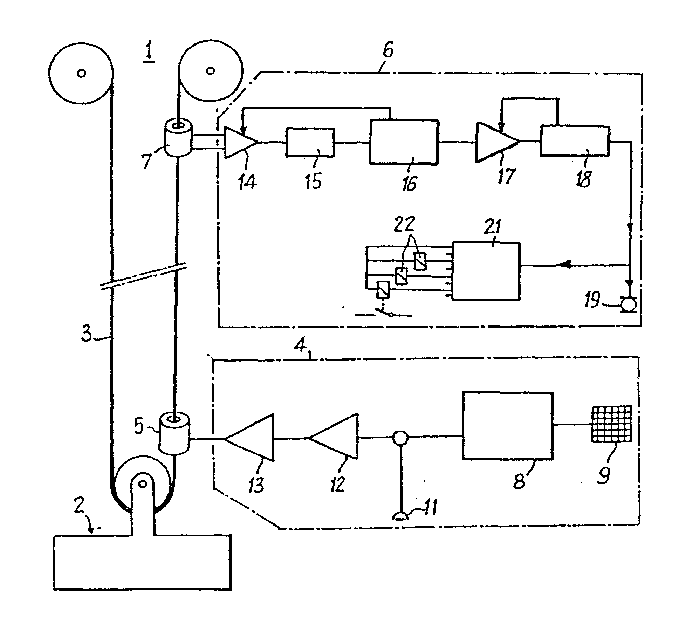

On décrira ci-après, à titre d'exemple non limitatif, une forme d'exécution de la présente invention, en référence au dessin annexé sur lequel la figure unique est un schéma synoptique d'un dispositif de transmission suivant l'invention.

Le dispositif suivant l'invention est prévu pour assurer la transmission de signaux utilisables pour la télécommande d'un treuil 1 assurant le déplacement d'une charge ou nacelle 2, par enroulement ou déroulement d'un câble porteur 3 en acier. Le dispositif de transmission comprend un ensemble émetteur 4 relié à une bobine de couplage émetrice 5 et un ensemble récepteur 6 relié à une bobine de couplage réceptrice 7. Chacune des bobines de couplage 5, 7, en forme de tore entoure le câble 3 et forme transducteur. Le câble porteur 3 en acier constitue une spire secondaire en court-circuit d'un transformateur d'intensité.

L'ensemble émetteur 4 comporte un encodeur 8 auquel est relié un clavier 9, et un microphone 11 d'un combiné téléphonique. L'encodeur 8 et le microphone 11 sont reliés à l'entrée d'un amplificateur de tension 12 dont la sortie est connectée à l'entrée d'un amplificateur de puissance 13 relié par sa sortie à la bobine de couplage émetrice 5.

Le codage des informations transmises par le câble 3 et qui sont émises par l'encodeur 8, s'effectue au moyen d'un système classique associant une logique câblée ou un microprocesseur à un système de transmission série pouvant exploiter une transmission du genre Modem ou fréquentielle. La transmission des signaux binaires émis par l'encodeur 8 est réalisée par décalage de fréquence au moyen de deux fréquences comprises dans la bande allant de 300 à 3000 Hz. Autrement dit un bit «1» est représenté par un signal ayant une première fréquence comprise dans cette bande tandis qu'un bit «0» est représenté par la seconde fréquence.

La liaison phonique est réalisée en modulant directement la bobine de couplage émetrice 5 formant transducteur, après amplification et compression du signal, par un système à commande de gain automatique qui est commun à la liaison phonique et à la liaison numérique.

La modulation basse fréquence appliquée au primaire du transducteur, constitué par la bobine de couplage émetrice 5, par le générateur de courant crée donc dans le câble 3 un courant proportionnel au rapport de transformation et à la résistance de ce câble 3. Ce dernier joue le rôle de noyau magnétique et augmente l'inductance.

A la réception l'ensemble récepteur 6 utilise une bobine de couplage 7 en forme de tore ou un capteur à effet Hall afin de restituer les variations de champ magnétique crées le long du câble sous la forme d'un signal électrique.

L'ensemble récepteur 6 comporte un préamplificateur différentiel à faible bruit 14 qui est connecté à la bobine de couplage réceptrice 7, puis un filtre passe-bande 15 (bande passante 300-3000 Hz), puis un détecteur de niveau 16 à commande automatique de gain (compresseur) et qui agit sur le préamplificateur 14. La sortie du détecteur de niveau 16 est reliée à une entrée d'un amplificateur 17 dont la sortie est connectée à un détecteur de niveau 18 à commande automatique de gain (expanseur) et qui agit sur l'amplificateur 17. Enfin la sortie du détecteur de niveau 18 est reliée d'une part à l'écouteur 19 d'un combiné téléphonique et d'autre part à un décodeur 21 qui agit sur des relais de commande 22.

Les détecteurs de niveau 16 et 18 à commande automatique de gain sont prévus pour tenir compte du fait que la dynamique du signal reçu peut varier dans un rapport supérieur à 10 000.

## Revendications

1. Dispositif de transmission pour la télécommande de treuils d'ascenseurs ou nacelles (2) pour le transport de charges ou de personnes, au moyen de signaux électriques transmis par le câble porteur (3), comprenant, pour l'émission et la réception, deux bobines de couplage respectivement émettrice (5) et réceptrice (7), chacune de ces bobines de couplage, en forme de tore, entourant le câble, formant transducteur et étant respectivement connectée à un ensemble émetteur (4) et à un ensemble récepteur (6), caractérisé en ce que l'ensemble émetteur (4) comprend, d'une part, un encodeur (8) relié à un clavier (9) et émettant des signaux alternatifs ayant une première ou une seconde fréquence, dans la bande allant de 300 à 3000 Hz, suivant la valeur du chiffre binaire à transmettre, et, d'autre part, un microphone (11), l'encodeur (8) et le microphone (11) étant reliés à l'entrée d'un étage amplificateur (12, 13) dont la sortie est connectée à la bobine de couplage émetrice (5), et l'ensemble (6) récepteur comporte un étage amplificateur (14) connecté à la bobine de couplage réceptrice (7) et qui alimente d'une part un décodeur (21) agissant sur des relais de commande et d'autre part un écouteur téléphonique (19).

2. Dispositif suivant la revendication 1 caractérisé en ce que l'ensemble récepteur (6) comprend un préamplificateur différentiel (14) connecté à la bobine de couplage réceptrice (7) et dont la sortie est reliée, par l'intermédiaire d'un filtre passe-bande (15), à l'entrée d'un détecteur de niveau (16) à commande automatique de gain (compresseur) agissant sur le préamplificateur (14), et la sortie de ce détecteur de niveau (16) est à son tour reliée à une entrée d'un amplificateur (17) dont la sortie est reliée à un second détecteur de niveau à commande automatique (18) de gain (expanseur) agissant sur l'amplificateur précédent (17) et dont la sortie alimente l'écouteur (19) et le décodeur (21).

## Patentansprüche

1. Übertragungsanordnung für die Fernsteuerung von Winden von Aufzügen oder Gondeln (2) für den Güter- oder Personentransport mit Hilfe von elektrischen Signalen, die über das Tragseil (3) übertragen werden, die zum Senden und Empfangen zwei Koppelspulen aufweist, eine Sendekoppelspule (5) und eine Empfangskoppelspule (7), wobei diese Koppelspulen jeweils ringförmig sind, das Seil umgeben, einen Transduktor bilden und mit einer Sendeschaltung (4) bzw. einer Empfangsschaltung (6) verbunden sind, dadurch gekennzeichnet, dass die Sendeschaltung (4) einerseits einen Kodierer (8) aufweist, der mit einer Tastatur (9) verbunden ist und wechselnde Signale liefert, die eine erste oder eine zweite Frequenz in einem Bereich haben, der von 300 bis 3000 Hz reicht, je nach dem Wert der zu übertragenden Binärzahl, und andererseits ein Mikrophon (11), wobei der Kodierer (8) und das Mikrophon (11) mit dem Eingang einer Verstärkerstufe (12, 13) verbunden sind, deren Ausgang mit der Sendekoppelspule (5) verbunden ist, und wobei die Empfangsschaltung (6) eine Verstärkerstufe (14) aufweist, die mit der Empfangskoppelspule (7) verbunden ist und einerseits einen Dekodierer (21) speist, der auf Steuerrelais einwirkt, und andererseits einen Telephonhörer (19).

2. Anordnung nach Anspruch 1, dadurch gekennzeichnet, dass die Empfangsschaltung (6) einen Differenzvorverstärker (14) aufweist, der mit der Empfangskoppelspule (7) verbunden ist und dessen Ausgang über ein Bandpassfilter (15) mit dem Eingang eines Pegeldetektors (16) mit automatischer Verstärkungssteuerung (Kompressor) verbunden ist, der auf den Vorverstärker (14) einwirkt, wobei der Ausgang dieses Pegeldetektors (16) seinerseits mit einem Eingang eines Verstärkers (17) verbunden ist, dessen Ausgang mit einem zweiten Pegeldetektor (18) mit automatischer Verstärkungssteuerung (Expander) verbunden ist, der auf den vorgeschalteten Verstärker (17) einwirkt und dessen Ausgang den Hörer (19) und den Dekodierer (21) speist.

## Claims

1. Transmission device for the remote control of winches for elevators or cars (2) carrying goods or passengers, using electrical signals transmitted by the carrying cable (3), comprising, for transmitting and receiving, two coupling coils which are respectively a transmitting coil (5) and a receiving coil (7), each of said coupling coils, which are torus-shaped, surrounding the cable to form a transducer and respectively linked to a transmitting unit (4) and a receiving unit (6), characterised in that the transmitting unit (4) comprises, on the one hand, an encoder (8) linked to a keyboard (9) and transmitting alternating signals having a first or a second frequency, in the 300 to 3000 Hz band, according to the value of the binary number that is to be transmitted, and, on the other hand, a microphone (11), the encoder (8) and the microphone (11) being linked to the input of an amplifier stage (12, 13) whose output is connected to the transmitter coupling coil (5), and the receiving unit (6) comprises an amplifier stage (14) connected to the receiver coupling coil (7) and supplying on the one hand a decoder (21) operating on control relays, and on the other a telephone earpiece (19).

2. Device according to Claim 1, characterised in that the receiving unit (6) comprises a differential pre-amplifier (14) connected to the receiver coupling coil (7) and the output of which is linked, via a band-pass filter (15), to the input of an automatic gain control level detector (16) (compressor) operating on the pre-amplifier (14), and the output of said level detector (16) is in turn linked to an input of an amplifier (17) whose output is linked to a second automatic gain control level detector (18) (expandor) operating on the foregoing amplifier (17) and whose output supplies the earpiece (19) and the decoder (21).